# EUROPÄISCHE PATENTSCHRIFT

(11) **EP 3 619 018 B1**
(45) Veröffentlichungstag und Bekanntmachung des Hinweises auf die Patenterteilung: **27.11.2024**
(21) Anmeldenummer: 18722053.8
(22) Anmeldetag: 04.05.2018
(51) Int. Cl.: B29C 33/26, B29C 49/36, B29C 49/56

(54) **VERFAHREN ZUM BETREIBEN EINER VORRICHTUNG ZUM UMFORMEN VON KUNSTSTOFFVORFORMLINGEN ZU KUNSTSTOFFBEHÄLTNISSEN UND VORRICHTUNG**
METHOD FOR OPERATING A DEVICE FOR FORMING PLASTIC PREFORMS INTO PLASTIC CONTAINERS, AND DEVICE
PROCÉDÉ SERVANT À FAIRE FONCTIONNER UN DISPOSITIF SERVANT À FAÇONNER DES PRÉFORMES EN MATIÈRE PLASTIQUE EN DES RÉCIPIENTS EN MATIÈRE PLASTIQUE, ET DISPOSITIF

(30) Priorität: 05.05.2017 DE 102017109742
(43) Veröffentlichungstag der Anmeldung: 11.03.2020
(73) Patentinhaber: Krones AG, 93073 Neutraubling (DE)
(72) Erfinder: GELTINGER, Florian, 93073 Neutraubling (DE); HACK, Andreas, 93073 Neutraubling (DE)
(74) Vertreter: Hannke Bittner & Partner mbB Regensburg
(86) Internationale Anmeldenummer: PCT/EP2018/061582
(87) Internationale Veröffentlichungsnummer: WO 2018/202885

(56) Entgegenhaltungen:
- EP-A1- 2 495 086
- EP-A1- 2 511 070

## Beschreibung

Die vorliegende Erfindung bezieht sich auf eine Vorrichtung zum Umformen von Kunststoffvorformlingen zu Kunststoffbehältnissen und auf ein Verfahren zum Betreiben einer derartigen Vorrichtung. Derartige Vorrichtungen und Verfahren sind aus dem Stand der Technik seit Langem bekannt. Dabei werden üblicherweise erwärmte Kunststoffvorformlinge in Blasformen gegeben und innerhalb dieser Blasformen durch Beaufschlagung mit Druckluft zu Kunststoffflaschen expandiert. Zu diesem Zweck weisen diese Vorrichtungen üblicherweise Blasformen auf, welche zum Ausbilden der entsprechenden Kunststoffflaschen dienen.

Falls auf andere Behältnisse umgestellt werden soll, ist es erforderlich, die Blasformen bzw. auch deren Einzelteile von Formträgern zu entfernen und durch andere Blasformen zu ersetzen. Im Stand der Technik ist es dabei üblich, dass die einzelnen Blasformteile manuell gewechselt werden. Auch sind aus dem Stand der Technik diverse Verfahren und Vorrichtungen bekannt, die einen derartigen Wechselvorgang durchführen. So ist aus dem internen Stand der Technik der Anmelderin ein Verfahren bekannt, bei dem zunächst eine Verriegelung zwischen den Formträgern gelöst wird und anschließend die Formträger geöffnet werden, die Formen gewechselt werden, die Formträger wieder geschlossen werden und auch die Verriegelung wieder geschlossen wird. Dies erfolgt aber üblicherweise in unterschiedlichen Positionen eines Blasrads.

Die vorliegende Erfindung bezieht sich damit insbesondere auf ein Verfahren zum Durchführen eines Blasformwechsels einer Blasformmaschine.

Der vorliegenden Erfindung liegt die Aufgabe zugrunde, eine Zeitersparnis für einen derartigen Wechselvorgang von Blasformen zu ermöglichen. Dies wird erfindungsgemäß durch ein Verfahren und eine Vorrichtung nach den unabhängigen Patentansprüchen erreicht. Vorteilhafte Ausführungsformen und Weiterbildungen sind Gegenstand der Unteransprüche. Das Dokument EP 2 495 086 A1 offenbart eine Blasmaschine mit Blasformverriegelung, wobei der Verriegelungsmechanismus ein erstes Verriegelungselement aufweist, welches zum Verriegeln mit einem zweiten Verriegelungselement zusammenwirkt.

Bei einem erfindungsgemäßen Verfahren zum Betreiben einer Vorrichtung zum Umformen von Kunststoffvorformlingen zu Kunststoffbehältnissen (und insbesondere einem Verfahren zum Durchführen eines Blasformwechsels für eine Vorrichtung zum Umformen von Kunststoffvorformlingen zu Kunststoffbehältnissen) weist diese Vorrichtung einen bewegbaren und insbesondere drehbaren Träger auf, an welchem eine Vielzahl von Umformungsstationen zum Umformen von Kunststoffvorformlingen zu Kunststoffbehältnissen angeordnet ist.

Dabei weisen diese Umformungsstationen jeweils wenigstens zwei Formträger auf, an denen (-zumindest mittelbar-) Blasformteile angeordnet sind, wobei diese Blasformteile Bestandteile einer Blasform sind und einen Hohlraum ausbilden, innerhalb dessen die Kunststoffvorformlinge durch Beaufschlagung mit einem fließfähigen Medium (und insbesondere mit Druckluft) zu den Kunststoffbehältnissen expandierbar sind und wobei diese beiden Formträger bezüglich einander zum Öffnen oder Schließen der Blasform schwenkbar sind und wobei die Umformungsstation weiterhin einen Verriegelungsmechanismus aufweist, der dazu geeignet und bestimmt ist, die beiden Formträger zumindest zeitweise miteinander zu verriegeln und/oder zu entriegeln, wobei weiterhin ein Wechselbetrieb der Vorrichtung vorgesehen ist, in welchem zumindest Bestandteile der Blasform gewechselt werden und weiterhin eine erste Betätigungsvorrichtung vorgesehen ist, ein Entriegeln und/oder Verriegeln des Verriegelungsmechanismus bewirkt. Weiterhin ist eine zweite Betätigungsvorrichtung vorgesehen, welche den oder die Formträger in eine Offen und/oder Geschlossenstellung bringt (und/oder die Formträger von einer Offenstellung in eine Geschlossenstellung oder von einer Geschlossenstellung in eine Offenstellung bringt).

Erfindungsgemäß wird wenigstens einer der durch wenigstens eine der Betätigungsvorrichtungen ausgelösten und/oder bewirkten und/oder durchgeführten Vorgänge durch Drehbewegung des Trägers gegenüber der (jeweiligen) Betätigungsvorrichtung bewirkt und/oder ausgelöst und/oder durchgeführt.

Bei den genannten Vorgängen handelt es sich damit insbesondere um das Ent- oder Verriegeln des Formträgers und/oder das Öffnen und/oder Schließen des Formträgers (und/oder der beiden Formträger). Bevorzugt ist in einem verriegelten Zustand der des Verriegelungsmechanismus ein Öffnen der Blasform verhindert und in einem entriegelten Zustand des Verriegelungsmechanismus ermöglicht.

Bevorzugt handelt es sich bei den Vorgängen um Schwenkbewegungen und/oder diese Vorgänge schließen Schwenkbewegungen ein.

Genauer gesagt werden bevorzugt die genannten Vorgänge durch eine Drehbewegung des Trägers (auch als Blasrad bezeichnet) gegenüber der oder den Betätigungsvorrichtungen durchgeführt, wobei es sich bei dieser Drehbewegung insbesondere um eine Drehbewegung des Trägers gegenüber der (ruhenden) Umgebung handelt.

Bei einem weiteren bevorzugten Verfahren wird der jeweils andere der genannten Vorgänge bei einem Stillstand des Trägers ausgelöst, ausgeführt und/oder durchgeführt. So wäre es möglich, dass ein Verriegeln und/oder Entriegeln der Blasformträger während und/oder durch eine Bewegung des Trägers (Blasrads) erfolgt und ein Öffnen und/oder Schließen der Formträger während eines Stillstands des Trägers (Blasrads) erfolgt. Umgekehrt wäre es möglich, dass ein Verriegeln und/oder Entriegeln der Blasformträger während eines Stillstands des Trägers (Blasrads) erfolgt und ein Öffnen und/oder Schließen der Formträger während und oder durch eine Bewegung des Trägers (Blasrads).

Im internen Stand der Technik der Anmelderin ist es teilweise üblich, dass durch eine Zustellung des Betätigungsmechanismus oder eines Elements des Betätigungsmechanismus der Verriegelungsmechanismus geöffnet wird. Im Rahmen der Erfindung wird hingegen eine gewissermaßen passive Entriegelung vorgeschlagen, welche durch eine Bewegung der Umformungsstation, beispielsweise gegenüber einer Führungskurve erfolgt. Damit bewegt sich insbesondere die Umformungsstation (gegenüber der Umgebung) selbst und nicht nur bezüglich der Betätigungseinrichtung.

Damit erfolgt bevorzugt hier das Entriegeln durch ein Vorbeilaufen der einzelnen Umformungsstationen an einer Führungskurve und es kann damit eine ohnehin nötige bzw. vorhandene Bewegung der Umformungsstation verwendet werden, um ein Entriegeln und gegebenenfalls auch später ein Verriegeln der Formträger zu erreichen. Mit anderen Worten wird anstelle einer aktiven Ent- bzw. Verriegelung insbesondere zeitgleich mit dem Öffnen des Formträgers eine passive Ent- bzw. Verriegelung des Formträgers vorgesehen und bevorzugt auch ein anschließendes Öffnen und Schließen des Formträgers. Auf diese Weise wird eine Zeitersparnis gegenüber dem aktiven Ent- oder Verriegeln ermöglicht, da die Entriegelung bzw. Verriegelung zeitgleich mit dem Einfahren der Blasstation insbesondere in eine Wechselposition bzw. auch mit einem Verlassen dieser Wechselposition stattfinden kann.

So ist es beispielsweise möglich, dass anstelle der Verwendung einer aktiv angesteuerten Kurve zur Ent- oder Verriegelung des Formträgers die Ent- und Verriegelungskurve vor dem automatischen Blasformwechsel beispielsweise mittels eines Roboters ausgefahren wird.

Es ist dabei möglich, dass das Blasformteil, bei dem es sich insbesondere um ein Seitenteil der Blasform handelt, unmittelbar an dem Seitenteilträger angeordnet ist. Es wäre jedoch auch möglich und bevorzugt, dass das Seitenteil mittels einer Trägerschale an dem Seitenteilträger angeordnet ist.

Bei einem bevorzugten Verfahren wird die Umformungsstation in eine Wechselposition transportiert und in dieser Wechselposition werden wenigstens Bestandteile der Blasform gewechselt. Neben dem Auswechseln der Bestandteile können auch andere Vorgänge durchgeführt werden, wie beispielsweise eine Trennung von Medienanschlüssen, etwa für flüssige Temperiermedien, welche zum Temperieren der Blasformteile dienen.

Bevorzugt wird dabei die Umformungsstation durch eine Bewegung des Trägers und insbesondere eine Drehbewegung des Trägers bewegt und durch diese Bewegung wird bevorzugt der Verriegelungsmechanismus entriegelt. Bevorzugt erfolgt daher die Entriegelung während einer Bewegung der Umformungsstation und/oder während einer Drehbewegung des Trägers, an dem die einzelnen Umformungsstationen angeordnet sind.

Bei einem weiteren bevorzugten Verfahren wird die erste Betätigungsvorrichtung und/oder das Betätigungselement (bei dem es sich, wie oben erwähnt, insbesondere um ein Kurvensegment handeln kann) vor oder während einem Wechselvorgang in die Bewegungsbahn der Kurvenrolle zugestellt, derart, dass der Verriegelungsmechanismus durch eine Drehbewegung des Trägers bzw. Blasrads gegenüber der Betätigungsvorrichtung ver- und/oder entriegelt wird.

Anschließend ist es möglich, dass in einer stehenden Position des Träger bzw. Blasrads, insbesondere mittels eines weiteren Betätigungsmechanismus die Formträger geöffnet werden.

Bei einem besonders bevorzugten Verfahren wird das Betätigungselement und/oder Kurvenstück der ersten Betätigungsvorrichtung pneumatisch in die Bewegungsbahn der Kurvenrolle zugestellt. Bevorzugt ist daher eine pneumatische Antriebsvorrichtung vorgesehen, welche dazu geeignet und bestimmt ist, eine Bewegung des Betätigungselements zu bewirken. Anstelle einer pneumatischen Antriebseinrichtung wären jedoch auch elektrische, elektromotorische, magnetische oder hydraulische Antriebe denkbar.

Bei einem weiteren vorteilhaften Verfahren steht die zweite Betätigungsvorrichtung und/oder das zweite Betätigungselement (bei dem es sich ebenfalls um ein Kurvenstück handeln kann) wenigstens zeitweise und bevorzugt ständig während des Wechselvorgangs zusammen mit der Kurvenrolle in Eingriff und ist in eine Position gebracht ist, welcher einer wenigstens teilweisen Offenstellung und bevorzugt der Offenstellung des Formträgers entspricht.

Bei einem weiteren vorteilhaften Verfahren steht die zweite Betätigungsvorrichtung bzw. das zweite Betätigungselement zusammen mit der Kurvenrolle in Eingriff und kann besonders bevorzugt eine zweite Position einnehmen, welche einer Geschlossenstellung des Formträgers entspricht.

Bei einem weiteren vorteilhaften Verfahren entspricht die Offenstellung des Formträgers einer Position (der Umformungsstation), in welcher das Blasrad bzw. der Träger still steht.

Besonders bevorzugt ist die Positionierung der Betätigungsvorrichtung und/oder eines Betätigungselements dieser Betätigungsvorrichtung von der ersten in die zweite Position und umgekehrt pneumatisch angetrieben. Alternativ wären jedoch auch hier elektromotorische, hydraulische oder magnetische Antriebe denkbar.

Bei einem weiteren vorteilhaften Verfahren wird der Wechsel der Blasformen durch einen halbautomatischen, vorzugsweise vollautomatischen Formwechselroboter und/oder Handhabungsmanipulator durchgeführt.

Dabei ist es möglich, dass dieser Verriegelungsmechanismus ein schwenkbares Element aufweist, welches ein weiteres Verriegelungselement hintergreifen kann. So kann beispielsweise ein erster Bestandteil des Verriegelungsmechanismus an einem der beiden Formträger angeordnet sein und ein zweites Element des Verriegelungsmechanismus an dem anderen Formträger. Bevorzugt ist eines dieser beiden Elemente gegenüber dem anderen zum Verriegeln und Entriegeln des Verriegelungsmechanismus schwenkbar. Diese Schwenkbewegung kann dabei durch eine Kurvenrolle erreicht werden.

Im Stand der Technik wird üblicherweise die Umformungsstation in eine Wechselposition gefahren und zum Stillstand gebracht. Nach dieser Positionierung kann eine Ent- bzw. Verriegelungskurve ausfahren und den Verriegelungsmechanismus entriegeln bzw. den Formträger entriegeln. Anschließend wird der Formträger geöffnet, ein Blasformenpaket gewechselt und der Formträger wieder geschlossen. Durch das Einfahren der Ent- und Verriegelungskurve wird der Formträger wieder verriegelt.

Im Rahmen der Erfindung ist es möglich, dass ein Betätigungselement, wie beispielsweise eine Ent- bzw. Verriegelungskurve vor dem Anfahren der Blasstation in eine Wechselposition ausgefahren wird. Eine an der Verriegelungsklappe angebrachte Rolle fährt im Wechselmodus an der Ent- bzw. Verriegelungskurve entlang. So ist es möglich, dass durch eine spezielle Form der Ent- bzw. Verriegelungskurve die Verriegelungsklappe während dem Vorbeifahren der Blasstation geöffnet und wieder geschlossen wird.

Damit liegt der Unterschied der vorliegenden Erfindungen zum bisherigen Stand der Technik darin, dass der Formträger während dem Vorbeilaufen an einer Ent- bzw. Verriegelungskurve ent- bzw. verriegelt werden kann und nicht nur bei einem Stillstand der Maschine.

Bei einem weiteren vorteilhaften Verfahren wird der Verriegelungsmechanismus vor Erreichen (oder mit Erreichen) der Wechselposition entriegelt. Bei Erreichen der Wechselposition können dann die Formträger mit den daran angeordneten Blasformteilen geöffnet werden.

Bei einem weiteren bevorzugten Verfahren weist diese Betätigungsvorrichtung ein Betätigungselement auf, welches zwischen einer ersten Position und einer zweiten Position bewegbar ist, wobei dieses Betätigungselement in wenigstens einer der beiden Positionen durch einen mechanischen Kontakt mit wenigstens einem Element der Umformungsstation ein Entriegeln des Verriegelungsmechanismus bewirkt. So kann es sich beispielsweise um eine Ver- bzw. Entriegelungskurve handeln, die für den Wechselbetrieb in eine bestimmte Position zugestellt wird, in der sie in der Lage ist, die Entriegelung zu bewirken bzw. die Verriegelung zu lösen.

Bei einem weiteren bevorzugten Verfahren kann durch eine weitere Bewegung der Umformungsstation wieder ein Verriegeln des Verriegelungsmechanismus bewirkt werden. So ist es möglich, dass die Umformungsstation in eine Wechselposition gefahren wird und in dieser Position die Blasformteile ausgewechselt werden. Nach einem erfolgten Wechsel kann die Umformungsstation in der bisherigen Bewegungsrichtung weiter bewegt bzw., gefahren werden und dadurch die Verriegelungseinrichtung wieder verriegelt werden. Bei einem bevorzugten Verfahren wird zunächst ein Betätigungselement in einer bestimmten Position ausgefahren. Dies kann beispielsweise mittels eines Roboters erfolgen. Eine erste Umformungsstation fährt anschließend in ihre Wechselposition. Während des Anfahrens dieser Wechselposition kann eine Rolle an einer Verriegelungsklappe über eine Ent- bzw. Verriegelungskurve fahren und die Verriegelungsklappe wird somit bis zum Erreichen der Wechselposition geöffnet.

An der Wechselposition wird die Umformungsstation insbesondere mittels einer Betätigungsvorrichtung genau positioniert und besonders bevorzugt auch mit Druckluft versorgt.

In einem weiteren Verfahrensschritt kann der Formträger bzw. können die Formträger geöffnet werden, was insbesondere auch mit einer Betätigungsvorrichtung erfolgen kann. In einem geöffneten Zustand kann das Blasformenpaket gewechselt werden und insbesondere mit Hilfe eines Roboters gewechselt werden. Anschließend können die Formträger wieder geschlossen werden. In einem weiteren Verfahren verlässt die Umformungsstation wieder die besagte Wechselposition. Dabei ist es möglich, dass eine Rolle an der Verriegelungsklappe des Formträgers wiederum an dem Element, insbesondere der Ent- bzw. Verriegelungskurve entlang fährt und die Formträger dadurch wieder verriegelt werden. Dabei ist es möglich, dass der Verriegelungsmechanismus vorgespannt wird, sodass er sich ohne äußere Kräfte sich in einen geschlossenen Zustand bewegt bzw. befindet. Während der gesamten Zeit, in der die Verriegelung geöffnet ist, bleibt bevorzugt die Ansteuerrolle an bzw. in der Kurve des Betätigungselements zum Öffnen und Schließen des Formträgers geführt. Auf diese Weise kann erreicht werden, dass es nicht zu einem unbeabsichtigten Öffnen des Formträgers kommt.

Nachdem dieser Vorgang für alle Umformungsstationen, bei denen die Blasform gewechselt werden soll, durchgeführt würde, ist es möglich, das Betätigungselement, beispielsweise eine Ent- bzw. Verriegelungskurve wieder zurückzustellen bzw. einzufahren.

Bei einem weiteren vorteilhaften Verfahren fährt die Umformungsstation in eine Wechselposition, d.h. diejenige Position, in der die Blasform ausgewechselt werden kann. Während dieses Einfahrens wird die Blasform über Führungskurve bzw. das oben genannte Betätigungselement entriegelt. Diese Führungskurve wird dabei, wie bereits oben erwähnt, ausgefahren und/oder in eine Arbeitsposition verbracht, bevor die erste Umformungsstation in die Wechselposition einfährt. In dieser Arbeitsposition bzw. diesem ausgefahrenen Zustand verbleibt das Betätigungselement bevorzugt bis die Blasformen sämtlicher Umformungsstationen gewechselt sind.

In einem weiteren Verfahrensschritt wird die betreffende Umformungsstation zentriert bzw. genau positioniert. Weiterhin wird die Umformungsstation mit Luft versorgt. Zu diesem Zweck kann beispielsweise ein Zentrierelement in ein Element der Umformungsstation einfahren. In einem weiteren Verfahrensschritt werden die Blasformträger geöffnet und die Blasform (insbesondere mittels einer Wechseleinrichtung wie einem Wechselroboter entnommen. Anschließend wird eine neue Blasform eingesetzt und die Formträger werden wieder geschlossen.

In einem weiteren Verfahrensschritt fährt die Zentriereinrichtung aus der Umformungsstation. Nunmehr dreht das Blasrad bzw. der Träger weiter und damit bewegt sich die Umformungsstation wieder von der Wechselposition weg. Bevorzugt werden durch diese Bewegung die Blasformträger wieder miteinander verriegelt.

Die vorliegende Erfindung ist weiterhin auf eine Vorrichtung zum Umformen von Kunststoffvorformlingen zu Kunststoffbehältnissen (und insbesondere Kunststoffflaschen) gerichtet, wobei die Vorrichtung einen bewegbaren Träger und insbesondere einen drehbaren Träger aufweist, an dem eine Vielzahl von Umformungsstationen zum Umformen von Kunststoffvorformlingen zu Kunststoffbehältnissen angeordnet ist und diese Umformungsstationen jeweils wenigstens zwei Formträger aufweisen, an denen Blasformteile angeordnet sind. Dabei sind diese Blasformteile Bestandteile einer Blasform und bilden einen Hohlraum aus, innerhalb dessen die Kunststoffvorformlinge durch Beaufschlagung mit einem fließfähigen Medium zu den Kunststoffbehältnissen expandierbar sind. Weiterhin sind diese beiden Formträger bezüglich einander zum Öffnen und Schließen der Blasform schwenkbar und die Umformungsstationen weisen, weiterhin einen Verriegelungsmechanismus auf, der dazu geeignet und bestimmt ist, die beiden Formträger zumindest zeitweise derart miteinander zu verriegeln, dass eine Öffnungsbewegung der Blasform verhindert ist.

Weiterhin ist ein Wechselbetrieb der Vorrichtung vorgesehen, in welchem zumindest Bestandteile der Blasform gewechselt werden. Daneben ist auch eine Betätigungsvorrichtung vorgesehen, welche vor oder während der Durchführung eines Wechselbetriebs ein Verriegeln und/oder Entriegeln des Verriegelungsmechanismus derart bewirkt, dass die Blasform geöffnet werden kann. Weiterhin ist eine zweite Betätigungsvorrichtung vorgesehen, welche den Formträger in eine Offen- und/oder -Geschlossenstellung bringt.

Erfindungsgemäß ist der Verriegelungsmechanismus in einem Wechselbetrieb der Vorrichtung durch eine Bewegung der Umformungsstation gegenüber der Betätigungsvorrichtung ver- und/oder entriegelbar und/oder der Formträger ist durch eine Bewegung der Umformungsstation gegenüber der Betätigungsvorrichtung in eine Offen- und/oder Geschlossenstellung bringbar.

Es wird daher auch vorrichtungsseitig vorgeschlagen, dass die Entriegelung und/oder das Öffnen bzw. Schließen des Formträgers durch eine Bewegung und insbesondere eine aktive Bewegung der Umformungsstationen erfolgt. Insbesondere handelt es sich hierbei um eine Bewegung des Trägers bzw. des Blasrads, an dem die einzelnen Umformungsstationen angeordnet sind. Es werden also jeweils die Umformungsstationen bewegt, um eine Entriegeln des Verriegelungsmechanismus zu erreichen.

Bevorzugt ist der jeweils andere der genannten Vorgänge während eines Stillstands des Trägers bzw. Blasrads durchführbar.

Bei einer bevorzugten Ausführungsform weist die Betätigungsvorrichtung ein Betätigungselement auf, welches durch einen mechanischen Kontakt mit wenigstens einem Element der Umformungsstation ein Entriegeln des Verriegelungsmechanismus bewirkt. Vorteilhaft handelt es sich bei dem Element der Umformungsstation um eine Führungsrolle, welche dazu geeignet und bestimmt ist, gegenüber dem Entriegelungselement abzurollen. Bei dem Entriegelungselement kann es sich dementsprechend um eine Führungskurve handeln.

Bei einer bevorzugten Ausführungsform ist dieses Betätigungselement zwischen wenigstens zwei Positionen bewegbar. So kann eine Position eine neutrale Position sein, in der ein entsprechendes Ver- oder Entriegeln der Umformungsstation nicht möglich ist und es kann eine aktive Position geben, in der sowohl ein Entriegeln als auch ein Verriegeln der Umformungsstationen möglich ist.

Bei einer weiteren vorteilhaften Ausführungsform ist der Verriegelungsmechanismus in oder nach dem Wechselbetrieb der Vorrichtung durch eine weitere Bewegung der Umformungsstation gegenüber der Betätigungsvorrichtung wieder verriegelbar. Wie oben ausgeführt kann in der Wechselposition ein Wechseln der Blasformen vorgenommen werden und nach durchgeführtem Blasformenwechsel kann durch eine weitere Bewegung der Umformungseinrichtung wieder der Verriegelungsmechnismus verriegelt werden.

Bei einem weiteren bevorzugten Verfahren ist das Betätigungselement derart ausgestaltet, dass es durch einen mechanischen Kontakt mit dem Element der Umformungsstation auch ein Verriegeln des Verriegelungsmechnismus bewirkt.

Bei einer bevorzugten Ausführungsform weist der Verriegelungsmechanismus ein Federelement auf, welches diesen Verriegelungsmechanismus in einen verriegelten Zustand drängt. Bevorzugt kann damit das Betätigungselement insbesondere in Form einer Führungskurve so gestaltet sein, dass es die Kurvenrolle auch wieder verriegelt.

Daneben können auch weitere Führungskurven vorgesehen sein, welche zum Öffnen und Schließen der Blasform dienen. Es wäre jedoch auch möglich, dass ein Öffnen und Schlie-ßen der Blasform nach einer Entriegelung durch einen Wechselroboter erfolgt.

Bei einer weiteren vorteilhaften Ausführungsform weist die Vorrichtung eine Wechseleinrichtung und insbesondere einen Wechselroboter auf, der dazu geeignet und bestimmt ist, Blasformteile von den Blasformträgerteilen zu demontieren. Dabei kann dieser Wechselroboter insbesondere auch geeignet und bestimmt sein, Medienanschlüsse zu trennen, beispielsweise Anschlüsse für Kühlmedien, welche zum Kühlen der Blasformteile dienen.

Bevorzugt ist die Wechseleinrichtung bzw. der Wechselroboter auch dazu geeignet und bestimmt, andere Blasformelemente an den Blasformträgern anzuordnen. Bevorzugt erfolgt ein derartiger Wechsel der Blasformteile in einer speziellen Wechselposition. Dabei kann eine Positioniereinrichtung vorgesehen sein, welche die Umformungsstationen in einer genau vorbestimmten Position hält bzw. in diese verfährt.

Weiterhin weist bevorzugt die Wechseleinrichtung ein Greifelement auf, um die Blasform zu greifen. Dabei ist bevorzugt die Blasform in ihrer Gesamtheit von einem Blasformträger bzw. den Blasformträgerteilen entnehmbar.

Bevorzugt ist eine Blasform auch in ihrer Gesamtheit in die Umformungsstationen einsetzbar.

Bei einer weiteren vorteilhaften Ausführungsform weist die Blasform auch ein Bodenteil auf. Dieses Bodenteil bildet bevorzugt gemeinsam mit den beiden Seitenteilen den Hohlraum aus, innerhalb dessen die Kunststoffvorformlinge zu den Kunststoffbehältnissen expandiert werden.

Bei einer weiteren vorteilhaften Ausführungsform übernimmt die Wechseleinrichtung bzw. der Wechselroboter auch ein Öffnen und/ oder Schließen der Blasform.

Bevorzugt weist die Betätigungseinrichtung ein Betätigungselement auf und dieses weist entlang seiner Oberfläche unterschiedliche Abschnitte auf, welche zum Öffnen und Schlie-ßen des Verriegelungsmechanismus dienen.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1a: Eine grob schematische Darstellung einer erfindungsgemäßen Vorrichtung zum Umformen von Kunststoffvorformlingen zu Kunststoffbehältnissen;
- Fig. 1b: Eine Darstellung einer Umformungsstation;
- Fig. 2a - 2e: Eine Darstellung eines Ablaufs zum Entriegeln der Blasformträger nach dem internen Stand der Technik der Anmelderin;
- Fig. 3a - 3f: Sechs Darstellungen zur Veranschaulichung eines erfindungsgemäßen Ablaufs;
- Fig. 4: Eine Darstellung eines Betätigungselements nach dem Stand der Technik;
- Fig. 5: Eine Darstellung eines erfindungsgemäßen Betätigungselements; und
- Fig. 6: Eine weitere Teilansicht einer erfindungsgemäßen Vorrichtung.

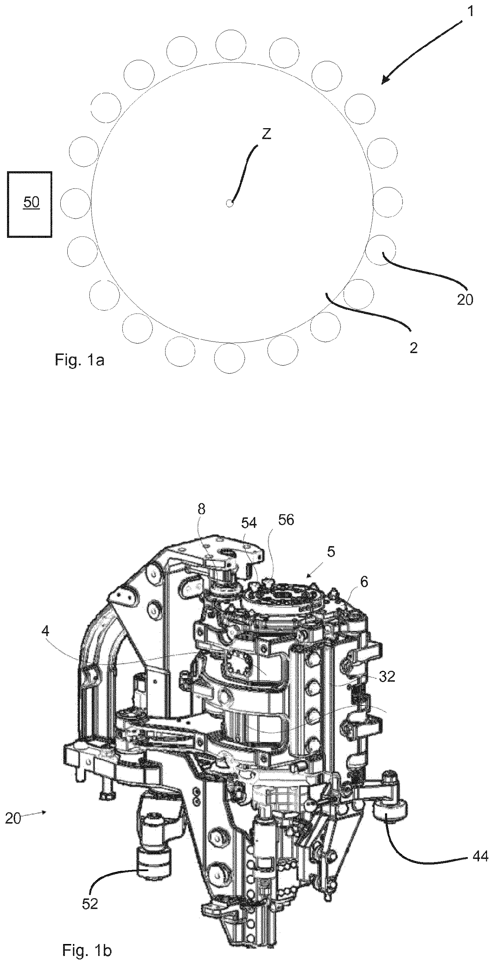

Figur 1a zeigt eine schematische Darstellung einer erfindungsgemäßen Vorrichtung 1 zum Umformen von Kunststoffvorformlingen zu Kunststoffbehältnissen. Diese Vorrichtung weist dabei einen um eine Drehachse Z drehbaren Träger 2 auf, an dem eine Vielzahl von Umformungsstationen 20 angeordnet ist. Diese Umformungsstationen 20 weisen jeweils (nicht gezeigte) Blasformen auf, die zum Fertigen der Kunststoffbehältnisse dienen. Das Bezugszeichen 50 kennzeichnet grob schematisch eine Wechseleinrichtung, wie insbesondere einen Wechselroboter, der dazu geeignet und bestimmt ist, Blasformen auszuwechseln. Dabei kann dieser Wechselroboter insbesondere auch dazu geeignet und bestimmt sein, die Blasformen in ihrer Gesamtheit einzuwechseln, aber auch dazu, nur Bestandteile der einzelnen Blasformen, wie etwa die Seitenteile, auszuwechseln.

Weiterhin kann die erfindungsgemäße Vorrichtung einen Reinraum (nicht gezeigt) aufweisen, der die Kunststoffvorformlinge während ihres Umformvorgangs umgibt. Dieser Reinraum kann dabei beispielsweise kanalartig ausgebildet sein.

Figur 1b zeigt eine Darstellung einer Umformungsstation 20. Diese Umformungsstation 20 weist einen ersten Seitenteilträger und einen zweiten Seitenteilträger 6 auf. Das Bezugszeichen 10 kennzeichnet in seiner Gesamtheit die Blasform, die an den Blasformträgern entweder unmittelbar oder mittelbar mittels Blasformträgerschalen angeordnet ist. Diese Blasform 10 weist dabei zwei Seitenteile auf, wobei ein Seitenteil an dem Blasformträger 4 angeordnet ist und das zweite Seitenteil an dem Blasformträger 6. Die Bezugszeichen 54 und 56 kennzeichnen Vorsprünge, welche dazu geeignet und bestimmt sind, von einer Wechseleinrichtung, wie etwa einem Roboter gegriffen zu werden, um so die Blasform selbst transportieren zu können.

Das Bezugszeichen 8 kennzeichnet eine Schwenkwelle, welche zum Schwenken der Blasformträger 4 und 6 dient. Mittels dieser Schwenkwelle kann ein Öffnen und Schließen der Blasform erreicht werden, indem wenigstens einer der beiden Blasformträger 4, 6 bezüglich dem anderen Blasformträger 6, 4 geschwenkt wird.

Das Bezugszeichen 52 kennzeichnet eine Kurvenrolle, welche zum Betätigen dieses Schwenkmechanismus dient. Dabei kann eine (nicht gezeigte) Führungskurve vorhanden sein, welche so das Öffnen und Schließen der Blasformen bewirkt.

Das Bezugszeichen 30 kennzeichnet in seiner Gesamtheit einen Verriegelungsmechanismus, der dazu geeignet und bestimmt ist, die Blasformträger 4 und 6 insbesondere in einem Arbeitsbetrieb miteinander zu verriegeln. Das Bezugszeichen 44 kennzeichnet eine weitere Kurvenrolle, welche zum Ent- und Verriegeln dieses Verriegelungsmechanismus dient. Dabei kann beispielsweise ein Verriegelungselement 32 geschwenkt werden, um so in Eingriff oder außer Eingriff mit einem zweiten Verriegelungselement 34 gebracht zu werden. Bevorzugt ist eine Schwenkachse, bezüglich derer das Verriegelungselement 32 schwenkbar ist, parallel zu der Schwenkachse, bezüglich derer wenigstens eines der beiden Blasformträger schwenkbar ist.

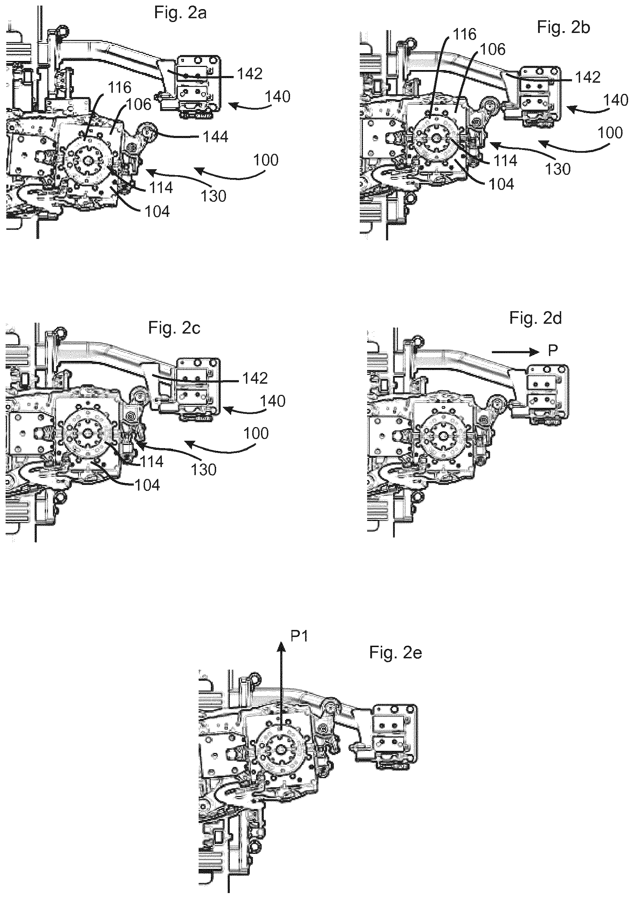

Die Figuren 2a bis 2e zeigen ein Verfahren nach dem internen Stand der Technik der Anmelderin. Dabei beziehen sich in allen Figuren die Bezugszeichen 104 und 106 auf Blasformträgerteile und die Bezugszeichen 114 und 116 auf Blasformteile, welche an diesen Blasformträgerteilen zumindest unmittelbar angeordnet sind. Das Bezugszeichen 130 kennzeichnet einen Verriegelungsmechanismus, der zum Verriegeln der beiden Blasformträger 104 und 106 dient. Zu diesem Zweck ist eine Kurvenrolle 144 vorgesehen, durch deren Betätigung eine Verriegelung aufgehoben bzw. entriegelt werden kann.

Bezugszeichen 140 kennzeichnet eine Betätigungsvorrichtung, welche zum Betätigung dieses Verriegelungsmechanismus 130 dient. Diese Betätigungsvorrichtung weist dabei ein Betätigungselement 142 auf, welches mit der Kurvenrolle 144 zum Entriegeln des Verriegelungsmechanismus 130 zusammenwirken kann.

In der in Figur 2a gezeigten Situation fährt die noch verriegelte Umformungsstation 100 in eine Wechselposition. Bei der in Figur 2b gezeigten Situation hat die Umformungsstation 100 die besagte Wechselposition erreicht. In dieser Position kann die Umformungsstation genau positioniert werden. Die Betätigungsvorrichtung 140 wird nunmehr verstellt, was beispielsweise durch eine Versorgung mit Druckluft erfolgen kann. Bei der in Figur 2c gezeigten Situation wird ein Betätigungselement 142 verstellt und dadurch wird durch ein Zusammenwirken mit der Kurvenrolle 144 auch der Verriegelungsmechanismus 130 gelöst. Damit ist bei dieser Vorgehensweise eine aktive Verriegelung durch die Betätigungsvorrichtung vorgesehen. In dieser Position können nunmehr die Blasformträger geöffnet werden und die Blasformteile können demontiert und durch neue Blasformteile ersetzt werden. Anschließend wird die Blasform wieder geschlossen. In einem weiteren Verfahrensschritt wird das Betätigungselement 142 wieder zurückgestellt (Pfeil P, Fig. 2d) und auf diese Weise werden die Formträger wieder miteinander verriegelt. Dieses Verriegeln der Formträger kann dabei gleichzeitig mit einem Schließen der Formträger stattfinden. Die Verriegelungskurve bzw. das Betätigungselement 142 fahren in dieser Situation ein.

Nach erfolgtem Wechsel fährt die Umformungsstation 100 aus der Wechselposition und bevorzugt wird eine weitere Umformungsstation in die in den Figuren gezeigte Wechselposition (Fig. 2e) verfahren, wobei sich dann die hier beschriebene Vorgehensweise zum Wechseln der Blasformen wiederholt.

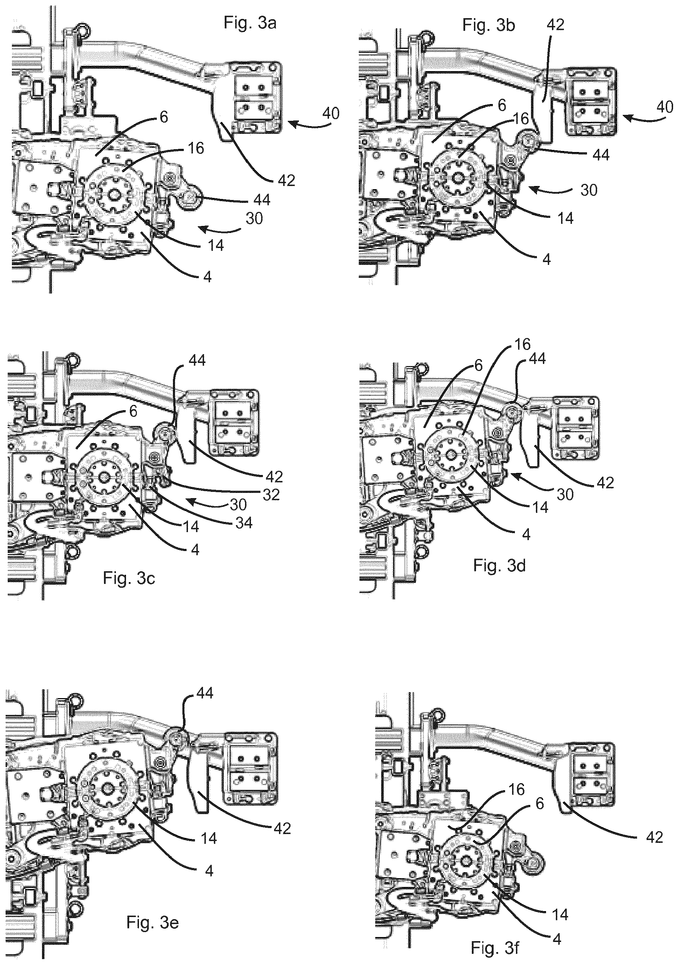

Die Figuren 3a bis 3f zeigen die erfindungsgemäße Vorgehensweise. Auch hier beziehen sich die Bezugszeichen 4 und 6 auf Blasformträger und die Bezugszeichen 14 und 16 auf Seitenteile der Blasform. Das Bezugszeichen 30 kennzeichnet wieder die Verriegelungseinrichtung bzw. den Verriegelungsmechanismus und das Bezugszeichen 44 eine Kurvenrolle, welche zum Ent- bzw. Verriegeln der Verriegelungseinrichtung 30 dient. Das Bezugszeichen 40 kennzeichnet in seiner Gesamtheit die Betätigungsvorrichtung mit dem Betätigungselement 142.

Bei der in Figur 3a gezeigten Situation ist eine Umformungsstation 20 dargestellt, welche noch verriegelt ist. Auch ein Betätigungselement 42 ist in dieser Situation noch zurückgestellt und damit hier noch nicht in der Lage, den Verriegelungsmechanismus zu betätigen.

Bei der in Figur 3b gezeigten Situation wird das Betätigungselement 42 nach links zugestellt und damit in eine Position verbracht, in der ein Entriegeln des Verriegelungsmechanismus 30 durch das Betätigungselement 42 möglich ist. Man erkennt, dass in der in Figur 3b gezeigten Situation die Kurvenrolle 44 gerade beginnt, an das Betätigungselement 42 anzulaufen.

Bei der in Figur 3c gezeigten Situation rollt die Kurvenrolle 44 durch eine Bewegung der Umformungsstation 20 gegenüber dem Betätigungselement 42 ab und auf diese Weise wird durch die Ausgestaltung des Betätigungselement 42 ein Öffnen des Verriegelungsmechanismus 30 erreicht. In dieser Situation kann nunmehr die Umformungsstation verbleiben und ein Wechselroboter kann die Blasform bzw. die Teile 14 und 16 der Blasform auswechseln.

In dieser Situation werden die Blasformträger auseinander geschwenkt und die Blasform kann entnommen werden und durch eine andere Blasform ersetzt werden. Dies erfolgt, wie oben erwähnt, bevorzugt unter Einsatz einer Wechseleinrichtung bzw. eines Roboters. Nach dem Einsetzen einer neuen Blasform werden die Blasformträger wieder zusammen geschwenkt.

Nachdem ein Wechsel der Blasform vorgenommen wurde, wird die Umformungsstation wie in Figur 3d gezeigt weiter bewegt und durch die Ausgestaltung des Betätigungselements wird die Verriegelung 30 bzw. der Verriegelungsmechanismus 30 wieder in Eingriff bzw. in eine verriegelte Position verbracht. Es wird darauf hingewiesen, dass dieser Schritt auch in einem Stillstand der Vorrichtung erfolgen könnte, in dem das Betätigungselement 42 bereits zu diesem Zeitpunkt zurückgestellt wird. Bevorzugt wird jedoch auch das Verriegeln wieder durch eine Bewegung der Umformungsstation bewirkt.

Bei der in Figur 3e gezeigten Situation hat die Umformungsstation nunmehr vollständig das Betätigungselement 42 verlassen und wird mit den neuen bzw. gewechselten Blasformteilen weiter bewegt. An dieser Stelle kann sich der Vorgang mit einer weiteren Umformungsstation wiederholen.

Bei der in Figur 3f gezeigten Situation schließlich wird das Betätigungselement 42 wieder zurückgestellt in die nicht aktive Position.

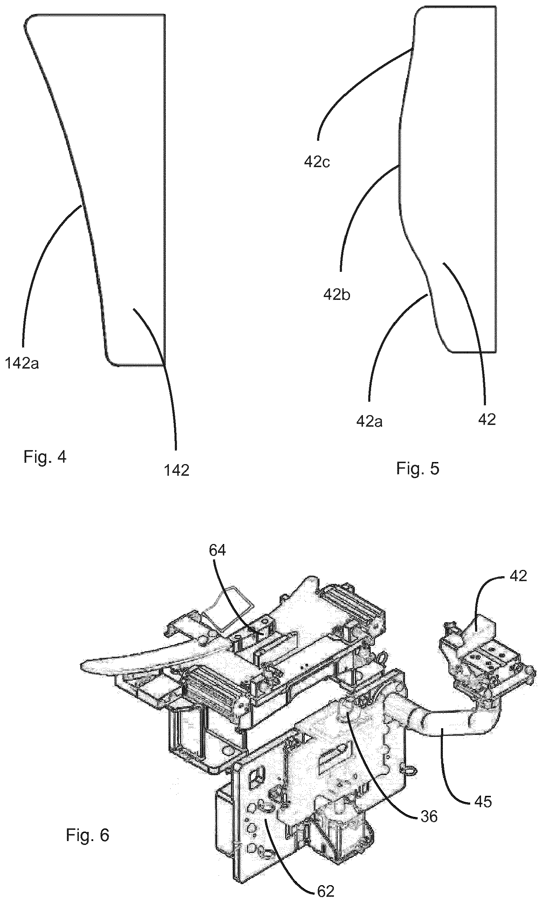

Figur 4 zeigt ein Betätigungselement 142 nach dem internen Stand der Technik der Anmelderin. Dieses Betätigungselement 142 weist eine Oberfläche 142a auf, der gegenüber die Kurvenrolle 4 abrollen kann. Man erkennt, dass die Oberfläche 142a einen kontinuierlichen Verlauf hat, sodass bei einer Relativbewegung der Umformungsstation auch die Kurvenrolle stetig in eine bestimmte Richtung gedrängt wird.

Figur 5 zeigt ein Betätigungselement 42 gemäß der Erfindung. Auch hier ist ein Oberflächenabschnitt 42a vorgesehen, der dazu dient, die Kurvenrolle in eine bestimmte Richtung zu drängen (um den Verriegelungsmechanismus zu entriegeln). An diesen Abschnitt 42a schließt sich ein Abschnitt 42b auf, in dem eine Position der Kurvenrolle nicht verändert wird. In dieser Position wird die Kurvenrolle in einer bestimmten Position gehalten und damit auch der Verriegelungsmechanismus 30 in einer bestimmten Stellung, hier einer geöffneten Stellung.

Das Bezugszeichen 42c kennzeichnet einen dritten Abschnitt des Betätigungselements 42 mit einer gegenüber dem Abschnitt 42a umgekehrten Steigung. In diesem Abschnitt wird damit die Kurvenrolle wieder zurückgestellt und damit kann auch der Verriegelungsmechanismus wieder verriegelt werden. Es wäre dabei möglich, dass das Betätigungselement eine Führungsnut (nicht gezeigt) aufweist, innerhalb derer eine Führungsrolle laufen kann. Es wäre jedoch auch möglich, dass das Verriegelungselement der Verriegelungseinrichtung durch eine Feder vorgespannt ist und damit allein durch den Verlauf der Oberfläche 42c die Möglichkeit erhält, sich zurückzustellen und so wieder einen verriegelten Zustand der Blasformträger herbeizuführen.

Fig. 6 zeigt eine erfindungsgemäße Umformungseinrichtung (ohne Umformungsstation) in dem Bereich der Wechselposition. Man erkennt hier wieder die Betätigungsvorrichtung 40, die an einem Ausleger 45 angeordnet ist. Das Bezugszeichen 36 kennzeichnet eine Zentriereinrichtung, welche dazu geeignet und bestimmt ist, die Umformungsstation an einer bestimmten Position zu halten bzw. die Umformungsstation an eine genau definierte Position, in der ein Wechselvorgang durchgeführt werden kann zu bringen. Diese Zentriereinrichtung ist hier als vertikal beweglicher Zentrierstift oder Zentrierbolzen ausgebildet, der in eine entsprechende Ausnehmung der nicht gezeigten Umformungsstation einfahren kann. Das Bezugszeichen 62 kennzeichnet eine Plattform, an welche ein (nicht gezeigter) Wechselroboter anfahren kann, um einen Blasformenwechsel durchzuführen. Das Bezugszeichen 64 kennzeichnet eine zweite Betätigungsvorrichtung, welche zum Öffnen und/oder Schließen der Blasformträger dient. Diese zweite Betätigungsvorrichtung kann dabei ebenfalls mit einer Kurvenrolle der Umformungsstationen zusammenwirken.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Träger
- 4: Blasformträger, Seitenteilträger
- 6: Blasformträger, Seitenteilträger
- 8: Schwenkwelle
- 10: Blasform
- 14: Seitenteil der Blasform
- 16: Seitenteil der Blasform
- 20: Umformungsstation
- 30: Verriegelungsmechanismus
- 32: Verriegelungselement
- 36: Zentriereinrichtung
- 34: zweites Verriegelungselement
- 40: erste Betätigungsvorrichtung
- 42: Betätigungselement
- 44: Kurvenrolle
- 45: Ausleger
- 50: Wechseleinrichtung
- 52: Kurvenrolle
- 54: Vorsprung
- 56: Vorsprung
- 62: Plattform
- 64: zweite Betätigungsvorrichtung
- 100: Umformungsstation
- 104: Blasformträgerteil
- 106: Blasformträgerteil
- 114: Blasformteile
- 116: Blasformteile
- 130: Verriegelungsmechanismus
- 140: Betätigungsvorrichtung
- 142: Betätigungselement
- 144: Kurvenrolle
- 142a: Oberfläche des Betätigungselements
- 42a: Oberflächenabschnitt des Betätigungselements
- 42b: zweiter Abschnitt des Betätigungselements
- 42c: dritter Abschnitt des Betätigungselements
- Z: Drehachse

## Patentansprüche

1. Verfahren zum Betreiben einer Vorrichtung (1) zum Umformen von Kunststoffvorformlingen zu Kunststoffbehältnissen wobei die Vorrichtung einen bewegbaren Träger (2) aufweist, an welchem eine Vielzahl von Umformungsstationen (20) zum Umformen von Kunststoffvorformlingen zu Kunststoffbehältnissen angeordnet ist und diese Umformungsstationen jeweils wenigstens zwei Formträger (4, 6) aufweisen, an denen Blasformteile (14, 16) angeordnet sind, wobei diese Blasformteile (14, 16) Bestandteile einer Blasform (10) sind und einen Hohlraum ausbilden, innerhalb dessen die Kunststoffvorformlinge durch Beaufschlagung mit einem fließfähigen Medium zu den Kunststoffbehältnissen expandierbar sind und wobei diese beiden Formträger (4, 6) bezüglich einander zum Öffnen und Schließen der Blasform (10) schwenkbar sind und wobei die Umformungsstationen (20) weiterhin einen Verriegelungsmechanismus (30) aufweist, der dazu geeignet und bestimmt ist, die beiden Formträger (14, 16) zumindest zeitweise derart mit einander zu Verriegeln, dass eine Öffnungsbewegung der Blasform (10) verhindert ist, wobei ein Wechselbetrieb der Vorrichtung (1) vorgesehen ist, in welchem zumindest Bestandteile der Blasform (10) gewechselt werden und eine erste Betätigungsvorrichtung (40) vorgesehen ist, welche ein Entriegeln und/oder Verriegeln des Verriegelungsmechanismus (30) bewirkt, und eine zweite Betätigungsvorrichtung (64) vorgesehen ist, welche den Formträger in eine Offen- und/oder -Geschlossenstellung bringt,
**dadurch gekennzeichnet, dass**
wenigstens einer der durch die Betätigungsvorrichtungen (40, 64) ausgelösten und/oder durchgeführten Vorgänge durch eine Drehbewegung des Trägers gegenüber der Betätigungsvorrichtung (40, 64) ausgelöst und/oder durchgeführt wird, wobei wenigstens einer der durch die Betätigungsvorrichtungen (40, 64) ausgelösten und/oder durchgeführten Vorgänge während eines Stillstands des Trägers (2) ausgelöst und/oder durchgeführt wird.

2. Verfahren nach Anspruch 1,
**dadurch gekennzeichnet, dass**
die Umformungsstation (2) in eine Wechselposition transportiert wird und in dieser Wechselposition wenigstens Bestandteile der Blasform (10) gewechselt werden.

3. Verfahren nach Anspruch 1,
**dadurch gekennzeichnet, dass**
die erste Betätigungsvorrichtung (40) vor oder während einem Wechselvorgang in die Bewegungsbahn der Kurvenrolle (44) zugestellt ist, derart, dass der Verriegelungsmechanismus (30) durch Drehbewegung des Blasrads gegenüber der Betätigungsvorrichtung (40) ver- und/oder entriegelt wird.

4. Verfahren nach Anspruch 3,
**dadurch gekennzeichnet, dass** das Kurvenstück der ersten Betätigungsvorrichtung (42) pneumatisch in die Bewegungsbahn der Kurvenrolle (44) zustellbar ist.

5. Verfahren nach Anspruch 1,
**dadurch gekennzeichnet, dass**
die zweite Betätigungsvorrichtung (64) während des Wechselvorgangs zusammen mit der Kurvenrolle (52) in Eingriff steht und in eine Position gebracht ist, welcher der Offenstellung des Formträgers entspricht.

6. Verfahren nach Anspruch 1,
**dadurch gekennzeichnet, dass**
die zweite Betätigungsvorrichtung (64) zusammen mit der Kurvenrolle (52) in Eingriff steht und eine zweite Position einnehmen kann, welche einer Geschlossenstellung des Formträgers entspricht.

7. Verfahren nach einem der vorangegangenen Ansprüche,
**dadurch gekennzeichnet, dass**
die Offenstellung des Formträgers einer Position entspricht, in welcher das Blasrad still steht.

8. Verfahren nach einem der vorangegangenen Ansprüche,
**dadurch gekennzeichnet, dass**
die Positionierung der Betätigungsvorrichtung (64) von der ersten in die zweite Position und umgekehrt pneumatisch angetrieben ist.

9. Verfahren nach wenigstens einem der vorangegangenen Ansprüche,
**dadurch gekennzeichnet, dass**
die Umformungsstation (20) durch eine Bewegung des Trägers (2) und insbesondere eine Drehbewegung des Trägers (2) bewegt wird und durch diese Bewegung zumindest der Verriegelungsmechanismus (30) entriegelt wird.

10. Verfahren nach wenigstens einem der vorangegangenen Ansprüche 2 - 4,
**dadurch gekennzeichnet, dass**
der Verriegelungsmechanismus (30) vor Erreichen der Wechselposition entriegelt wird.

11. Verfahren nach wenigstens einem der vorangegangenen Ansprüche,
**dadurch gekennzeichnet, dass**
die Betätigungsvorrichtung (40) ein Betätigungselement (42) aufweist, welches zwischen einer ersten Position und einer zweiten Position bewegbar ist, wobei dieses Betätigungselement (42) in wenigstens einer der beiden Positionen durch einen mechanischen Kontakt mit wenigstens einem Element (44) der Umformungsstation (20) ein Entriegeln des Verriegelungsmechanismus (30) bewirkt.

12. Verfahren nach wenigstens einem der vorangegangenen Ansprüche,
**dadurch gekennzeichnet, dass**
durch eine weitere Bewegung der Umformungsstation (20) wieder ein Verriegeln des Verriegelungsmechanismus (30) bewirkt wird.

13. Verfahren nach wenigstens einem der vorangegangenen Ansprüche,
**dadurch gekennzeichnet, dass**
der Wechsel der Blasformen durch einen halbautomatischen, vorzugsweise vollautomatischen Formwechselroboter und/oder Handhabungsmanipulator durchgeführt wird.

14. Vorrichtung (1) zum Umformen von Kunststoffvorformlingen zu Kunststoffbehältnissen wobei die Vorrichtung einen bewegbaren Träger (2) aufweist, an welchem eine Vielzahl von Umformungsstationen (20) zum Umformen von Kunststoffvorformlingen zu Kunststoffbehältnissen angeordnet ist und diese Umformungsstationen jeweils wenigstens zwei Formträger (4, 6) aufweisen, an denen Blasformteile (14, 16) angeordnet sind, wobei diese Blasformteile (14, 16) Bestandteile einer Blasform (10) sind und einen Hohlraum ausbilden, innerhalb dessen die Kunststoffvorformlingen durch Beaufschlagung mit einem fließfähigen Medium zu den Kunststoffbehältnissen expandierbar sind und wobei diese beiden Formträger (4, 6) bezüglich einander zum Öffnen und Schließen der Blasform (10) schwenkbar sind und wobei die Umformungsstationen (20) weiterhin einen Verriegelungsmechanismus (30) aufweisen, der dazu geeignet und bestimmt ist, die beiden Formträger (4, 6) zumindest zeitweise derart mit einander zu verriegeln, dass eine Öffnungsbewegung der Blasform (10) verhindert ist, wobei ein Wechselbetrieb der Vorrichtung (1) vorgesehen ist, in welchem zumindest Bestandteile der Blasform (10) gewechselt werden und eine erste Betätigungsvorrichtung (40) vorgesehen ist, welche vor oder während der Durchführung eines Wechselbetriebs ein Ver- und/oder Entriegeln des Verriegelungsmechanismus (30) bewirkt, und eine zweite Betätigungsvorrichtung (64) vorgesehen ist, welche den Formträger in eine Offen- und/oder -Geschlossenstellung bringt
**dadurch gekennzeichnet, dass**
der Verriegelungsmechanismus (30) in dem Wechselbetrieb der Vorrichtung (1) durch eine Bewegung der Umformungsstation (2) gegenüber der Betätigungsvorrichtung (40) entriegelbar und/oder verriegelbar ist und/oder der Formträger ist durch eine Bewegung der Umformungsstation gegenüber der Betätigungsvorrichtung in eine Offen- und/oder Geschlossenstellung bringbar ist, wobei wenigstens einer der durch die Betätigungsvorrichtungen (40, 64) ausgelösten und/oder durchgeführten Vorgänge während eines Stillstands des Trägers (2) auslösbar und/oder durchführbar ist.

15. Vorrichtung (1) nach Anspruch 14,
**dadurch gekennzeichnet, dass**
die Betätigungsvorrichtung (40) ein Betätigungselement (42) aufweist, welches durch einen mechanischen Kontakt mit wenigstens einem Element (44) der Umformungsstation (20) ein Entriegeln des Verriegelungsmechanismus (30) bewirkt.

16. Vorrichtung (1) nach wenigstens einem der Ansprüche 14 - 15,
**dadurch gekennzeichnet, dass**
die Vorrichtung (1) eine Wechseleinrichtung (50) und insbesondere einen Wechselroboter (50) aufweist, der dazu geeignet und bestimmt ist, Blasformteile (14, 16) von den Blasformträgerteilen (4, 6) zu demontieren.

## Claims

1. Method for operating an apparatus (1) for forming plastic preforms into plastic containers, wherein the apparatus has a movable carrier (2), on which a plurality of forming stations (20) are arranged for forming plastic preforms into plastic containers, and these forming stations each have at least two mould supports (4, 6) on which blow mould parts (14, 16) are arranged, wherein these blow mould parts (14, 16) are components of a blow mould (10) and form a hollow space within which the plastic preforms are expanded into the plastic containers by application of a flowable medium and wherein these two mould supports (4, 6) are pivotable with respect to one another for opening and closing the blow mould (10) and wherein furthermore the forming stations (20) have a latching mechanism (30) which is suitable and intended to latch the two mould supports (14, 16) at least at times to one another in such a way that an opening movement of the blow mould (10) is prevented, wherein a changing operation of the apparatus (1) is provided, in which at least components of the blow mould (10) are changed and a first actuating device (40) is provided, which effects an unlatching and/or latching of the latching mechanism (30), and a second actuating device (64) is provided which brings the mould support into an open and/or closed position,
**characterised in that**
at least one of the operations initiated and/or carried out by the actuating devices (40, 64) is initiated and/or carried out by a rotary movement of the carrier relative to the actuating device (40, 64), wherein at least one of the operations initiated and/or carried out by the actuating devices (40, 64) is initiated and/or carried out during a shutdown of the carrier (2).

2. Method according to claim 1,
**characterised in that**
the forming station (20) is transported into a changing position, and in this changing position at least components of the blow mould (10) are changed.

3. Method according to claim 1,
**characterised in that**
the first actuating device (40) is advanced before or during a changing operation into the movement path of the cam roller (44), in such a way that the latching mechanism (30) is latched and/or unlatched by a rotary movement of the blow moulding wheel relative to the actuating device (40).

4. Method according to claim 3,
**characterised in that**
the cam piece of the first actuating device (42) can be advanced pneumatically into the movement path of the cam roller (44).

5. Method according to claim 1,
**characterised in that**
during the changing operation the second actuating device (64) is in engagement together with the cam roller (52) and is brought into a position which corresponds to the open position of the mould support.

6. Method according to claim 1,
**characterised in that**
the second actuating device (64) is in engagement together with the cam roller (52) and can assume a second position which corresponds to a closed position of the mould support.

7. Method according to one of the preceding claims,
**characterised in that**
the open position of the mould support corresponds to a position in which the blow moulding wheel is stationary.

8. Method according to one of the preceding claims,
**characterised in that**
the positioning of the actuating device (64) is driven pneumatically from the first position into the second position and vice versa.

9. Method according to at least one of the preceding claims,
**characterised in that**
the forming station (20) is moved by a movement of the carrier (2) and in particular a rotary movement of the carrier (2) and at least the latching mechanism (30) is unlatched by this movement.

10. Method according to at least one of the preceding claims 2-4,
**characterised in that**
the latching mechanism (30) is unlatched before the changing position is reached.

11. Method according to at least one of the preceding claims,
**characterised in that**
the actuating device (40) has an actuating element (42) which is movable between a first position and a second position, wherein in at least one of the two positions this actuating element (42) effects an unlatching of the latching mechanism (30) by mechanical contact with at least one element (44) of the forming station (20).

12. Method according to at least one of the preceding claims,
**characterised in that**
latching of the latching mechanism (30) is effected again by a further movement of the forming station (20).

13. Method according to at least one of the preceding claims,
**characterised in that**
the changing of the blow moulds is carried out by a semi-automatic, preferably fully automatic mould change robot and/or handling manipulator.

14. Apparatus (1) for forming plastic preforms into plastic containers, wherein the apparatus has a movable carrier (2), on which a plurality of forming stations (20) are arranged for forming plastic preforms into plastic containers, and these forming stations each have at least two mould supports (4, 6) on which blow mould parts (14, 16) are arranged, wherein these blow mould parts (14, 16) are components of a blow mould (10) and form a hollow space within which the plastic preforms are expanded into the plastic containers by application of a flowable medium and wherein these two mould supports (4, 6) are pivotable with respect to one another for opening and closing the blow mould (10) and wherein the forming stations (20) have a latching mechanism (30) which is suitable and intended to latch the two mould supports (4, 6) at least at times to one another in such a way that an opening movement of the blow mould (10) is prevented, wherein a changing operation of the apparatus (1) is provided, in which at least components of the blow mould (10) are changed and a first actuating device (40) is provided, which effects a latching and/or unlatching of the latching mechanism (30) before or while a changing operation is carried out, and a second actuating device (64) is provided which brings the mould support into an open and/or closed position,
**characterised in that**
in the changing operation of the apparatus (1) the latching mechanism (30) can be unlatched or latched by a movement of the forming station (20) relative to the actuating device (40) and/or the mould support can be brought into an open and/or closed position by a movement of the transforming station relative to the actuating device, wherein at least one of the operations initiated and/or carried out by the actuating devices (40, 64) is initiated and/or carried out during a shutdown of the carrier (2).

15. Apparatus (1) according to claim 14,
**characterised in that**
the actuating device (40) has an actuating element (42) which effects an unlatching of the latching mechanism (30) by mechanical contact with at least one element (44) of the transforming station (20).

16. Apparatus (1) according to at least one of claims 14-15,
**characterised in that**
the apparatus (1) has a changing device (50) and in particular a changing robot (50) which is suitable and intended to demount blow mould parts (14, 16) from the blow mould support parts (4, 6).

## Revendications

1. Procédé de fonctionnement d'un dispositif (1) pour le façonnage de préformes en matière plastique en récipients en matière plastique, dans lequel le dispositif présente un support (2) mobile, au niveau duquel une pluralité de postes de façonnage (20) est agencée pour le façonnage de préformes en matière plastique en récipients en matière plastique et ces postes de façonnage présentent respectivement au moins deux supports de moule (4, 6), au niveau desquels des pièces de moulage par soufflage (14, 16) sont agencées, dans lequel ces pièces de moulage par soufflage (14, 16) sont des constituants d'un moule de soufflage (10) et réalisent une cavité, à l'intérieur de laquelle les préformes en matière plastique sont expansibles par alimentation en un milieu coulant en des récipients en matière plastique et dans lequel ces deux supports de moule (4, 6) sont pivotants l'un par rapport à l'autre pour l'ouverture et la fermeture du moule de soufflage (10) et dans lequel les postes de façonnage (20) présentent en outre un mécanisme de verrouillage (30) qui est approprié et destiné à verrouiller les deux supports de moule (14, 16) au moins temporairement l'un avec l'autre de telle manière qu'un mouvement d'ouverture du moule de soufflage (10) soit empêché, dans lequel un mode de changement du dispositif (1) est prévu, dans lequel au moins des constituants du moule de soufflage (10) sont changés et un premier dispositif d'actionnement (40) est prévu, lequel provoque un déverrouillage et/ou verrouillage du mécanisme de verrouillage (30), et un second dispositif d'actionnement (64) est prévu, lequel amène le support de moule dans une position ouverte et/ou fermée,
**caractérisé en ce que**
au moins une des opérations réalisées et/ou déclenchées par les dispositifs d'actionnement (40, 64) est réalisée et/ou déclenchée par un mouvement de rotation du support par rapport au dispositif d'actionnement (40, 64), dans lequel au moins une des opérations réalisées et/ou déclenchées par les dispositifs d'actionnement (40, 64) est réalisée et/ou déclenchée pendant un arrêt du support (2).

2. Procédé selon la revendication 1,
**caractérisé en ce que**
le poste de façonnage (2) est transporté dans une position de changement et au moins des constituants du moule de soufflage (10) sont changés dans cette position de changement.

3. Procédé selon la revendication 1,
**caractérisé en ce que**
le premier dispositif d'actionnement (40) est avancé avant ou pendant une opération de changement dans la bande de mouvement du galet de came (44) de telle manière que le mécanisme de verrouillage (30) soit verrouillé et/ou déverrouillé par mouvement de rotation de la roue de soufflage par rapport au dispositif d'actionnement (40).

4. Procédé selon la revendication 3,
**caractérisé en ce que**
la pièce de came du premier dispositif d'actionnement (42) peut être avancée de manière pneumatique dans la bande de mouvement du galet de came (44).

5. Procédé selon la revendication 1,
**caractérisé en ce que**
le second dispositif d'actionnement (64) est en prise pendant l'opération de changement conjointement avec le galet de came (52) et est amené dans une position qui correspond à la position ouverte du support de moule.

6. Procédé selon la revendication 1,
**caractérisé en ce que**
le second dispositif d'actionnement (64) est en prise conjointement avec le galet de came (52) et peut occuper une seconde position qui correspond à une position fermée du support de moule.

7. Procédé selon l'une quelconque des revendications précédentes,
**caractérisé en ce que**
la position ouverte du support de moule correspond à une position, dans laquelle la roue de soufflage s'arrête.

8. Procédé selon l'une quelconque des revendications précédentes,
**caractérisé en ce que**
le positionnement du dispositif d'actionnement (64) de la première dans la seconde position et inversement est entraîné de manière pneumatique.

9. Procédé selon au moins l'une quelconque des revendications précédentes,
**caractérisé en ce que**
le poste de façonnage (20) est déplacé par un mouvement du support (2) et en particulier un mouvement de rotation du support (2) et au moins le mécanisme de verrouillage (30) est déverrouillé par ce mouvement.

10. Procédé selon au moins l'une quelconque des revendications précédentes 2 à 4,
**caractérisé en ce que**
le mécanisme de verrouillage (30) est déverrouillé avant l'atteinte de la position de changement.

11. Procédé selon au moins l'une quelconque des revendications précédentes,
**caractérisé en ce que**
le dispositif d'actionnement (40) présente un élément d'actionnement (42) qui est mobile entre une première position et une seconde position, dans lequel cet élément d'actionnement (42) dans au moins une des deux positions provoque un déverrouillage du mécanisme de verrouillage (30) par un contact mécanique avec au moins un élément (44) du poste de façonnage (20).

12. Procédé selon au moins l'une quelconque des revendications précédentes,
**caractérisé en ce que**
un verrouillage du mécanisme de verrouillage (30) est provoqué à nouveau par un autre mouvement du poste de façonnage (20).

13. Procédé selon au moins l'une quelconque des revendications précédentes,
**caractérisé en ce que**
le changement des moules de soufflage est réalisé par un robot de changement de moule et/ou manipulateur semi-automatique, de préférence complètement automatique.

14. Dispositif (1) de façonnage de préformes en matière plastique en récipients en matière plastique, dans lequel le dispositif présente un support (2) mobile, au niveau duquel une pluralité de postes de façonnage (20) est agencée pour le façonnage de préformes en matière plastique en récipients en matière plastique et ces postes de façonnage présentent respectivement au moins deux supports de moule (4, 6), au niveau desquels des pièces de moulage par soufflage (14, 16) sont agencées, dans lequel ces pièces de moulage par soufflage (14, 16) sont des constituants d'un moule de soufflage (10) et réalisent une cavité, à l'intérieur de laquelle les préformes en matière plastique sont expansibles par alimentation en un milieu coulant en des récipients en matière plastique et dans lequel ces deux supports de moule (4, 6) sont pivotants l'un par rapport à l'autre pour l'ouverture et la fermeture du moule de soufflage (10) et dans lequel les postes de façonnage (20) présentent en outre un mécanisme de verrouillage (30) qui est approprié et destiné à verrouiller les deux supports de moule (4, 6) au moins temporairement l'un avec l'autre de telle manière qu'un mouvement d'ouverture du moule de soufflage (10) soit empêché, dans lequel un mode de changement du dispositif (1) est prévu, dans lequel au moins des constituants du moule de soufflage (10) sont changés et un premier dispositif d'actionnement (40) est prévu, lequel provoque un verrouillage et/ou déverrouillage du mécanisme de verrouillage (30) avant ou pendant la réalisation d'un mode de changement, et un second dispositif d'actionnement (64) est prévu, lequel amène le support de moule dans une position ouverte et/ou fermée,
**caractérisé en ce que**
le dispositif de verrouillage (30) peut être déverrouillé et/ou verrouillé dans le mode de changement du dispositif (1) par un mouvement du poste de façonnage (2) par rapport au dispositif d'actionnement (40) et/ou est le support de moule peut être amené par un mouvement du poste de façonnage par rapport au dispositif d'actionnement dans une position ouverte et/ou fermée, dans lequel au moins une des opérations réalisées et/ou déclenchées par les dispositifs d'actionnement (40, 64) peut être réalisée et/ou déclenchée pendant un arrêt du support (2).

15. Dispositif (1) selon la revendication 14,
**caractérisé en ce que**
le dispositif d'actionnement (40) présente un élément d'actionnement (42) qui provoque un déverrouillage du mécanisme de verrouillage (30) par un contact mécanique avec au moins un élément (44) du poste de façonnage (20).

16. Dispositif (1) selon au moins l'une quelconque des revendications 14 à 15,
**caractérisé en ce que**
le dispositif (1) présente un dispositif de changement (50) et en particulier un robot de changement (50) qui est approprié et destiné à démonter des parties de moulage par soufflage (14, 16) des parties de support de moule de soufflage (4, 6).
